# EUROPEAN PATENT APPLICATION

(11) **EP 1 882 876 A1**
(43) Date of publication of application: **30.01.2008**
(21) Application number: 06425527.6
(22) Date of filing: 26.07.2006
(51) Int. Cl.: F16L 33/207

(54) **Device for joining ducts, in particular for flexible ducts**

(71) Applicant: I.V.A.R. S.P.A., 25080 Prevalle (IT)
(72) Inventor: Bertolotti, Umberto, 25080 Prevalle (BS) (IT)
(74) Representative: Galassi, Alessandro

(57) **Abstract**

A device (1) for joining ducts, in particular flexible ducts, includes at least a tubular element (2) having an inlet (2a) and an outlet (2b) and a conduit (3) for setting in fluid communication the inlet (2a) with the outlet (2b), wherein the tubular element (2) shows an additional opening (9) acting between the conduit (3) and an outer surface of the tubular element (2) in order to allow a fluid passage from the conduit (3) towards the external environment when a duct is fitted on the tubular element (2). The device further includes a sealing element (7), which can be interposed between the tubular element (2) and the duct fitted on the same, and deformable for inhibiting in a controlled way a fluid communication between the conduit (3) and the outer surface of the tubular element (2).

## Description

The present invention relates to a device for joining ducts, and finds a particular use in the joining of flexible ducts (or hoses) for the circulation of pressurized fluids, for example water.

As it is known, the joining of flexible ducts is generally carried out by arranging a rigid tubular element, equipped with two or more ends which can be coupled to the same number of ducts and suitable for placing these latter in a fluid communication therebetween in a fluid-tight manner towards the outside.

Each end of the tubular element generally shows a shaped anchorage surface on which the duct is forced to adhere, and on which the duct is firmly grasped through an elastic or permanent deformation. Such anchorage surface can be carried out for example through a threaded surface, on which the duct is forced to engage by screwing, or by a surface having annular grooves, on which the duct is forced to couple by virtue of its elastic deformability. Such anchorage surfaces are usually carried out externally to the end, and the end itself is therefore introduced within an end of the duct, firmly combining thereto.

In order to assure a fluid sealing from the inside of the tubular element and the outside, and therefore prevent fluid escapes to the outside, outer sheaths are generally employed, for example metal sheaths which wrap the end of the duct coupled to the tubular element and are therefore permanently deformed, for example by imparting a flattening with a pliers, so as to cause a compression on the underlying duct. In this way, the duct is forced to get pressed against the underlying termination, causing a firm coupling with the same.

The mentioned outer sheaths result unnecessary when the duct itself already shows optimal features of permanent deformability, for example if the duct is made of a multilayer material which includes a metal layer with a sufficient thickness. In this case, it is sufficient to generate a deformation of the duct by directly acting on the duct itself, causing a flattening which results permanent due to a permanent deformation of the mentioned metal layer.

For the purpose of improving the fluid sealing between the internal of the ducts and the external environment, gaskets to be interposed between each end of the tubular element and the respective duct to which it is coupled, are usually foreseen. Such gaskets, generally 0-rings, provide for a fluid sealing already following to the introduction of the duct on the tubular element end, however such gaskets can further be deformed together with the duct itself following to the flattening of the outer sheath, if any, in order to adhere with a greater effectiveness to the end and the duct, and preventing fluid leakages between these latter towards the outside also in very high working pressure conditions.

The kind of coupling just described shows some drawbacks. In fact, particularly in complex plants and with a high number of connections, it is often advantageous to carry out in a first step all the connections, therefore subsequently provide, and after the connections have been carried out, for the tightening of the outer sheaths by flattening, for example with dedicated pliers. This operation can include the possibility that, in the great quantity of couplings to be tighten, the tightening of one or more of these coupling is accidentally omitted. However, this can also occur for domestic plants or, however, of a lower complexity, as it can be ascribed to accidental lacks or simple omissions.

Following to the non-tightening of one or more couplings, it has been noted that also in the inspection step of the plant, and particularly on the pressurization, the gaskets arranged between the ends of the connection elements and the ducts coupled thereto cause a sufficient sealing to prevent leakages and, therefore, localized fluid losses, also in correspondence with the non-tightened couplings. This is due to the fact that the gaskets are however deformed, even if slightly, following to the introduction of the duct on the end, and this put the gasket itself in the sealing conditions sufficient to avoid leakages. Unfortunately, the fluid sealing of the non-tightened gaskets gets worse over the time and can give rise to leakages after a period of time, which leakages are not however findable in the inspection step because of the reasons above listed.

Devices for joining flexible ducts are known, including gaskets properly pre-weakened in order to cause a fluid sealing exclusively following to the clamping of the duct, while showing discharges and leakages, as well as a drop of the fluid pressure in the plant, in case of non-clamping. Such pre-weakening is generally obtained through an under-dimensioning of the gaskets themselves, for example by reducing the outer diameter or the thickness, or by a conformation which weakens the sealing properties thereof in localized portions.

If, from one side, such gaskets do not generate a fluid sealing without a clamping, and therefore they show a behaviour of a non-clamping detection, they introduce dangerous pre-weakenings which can compromise the behaviour over time thereof, also considering that such gaskets are often subjected to heat and fatigue cycles which determine a serious work stress thereof. This is negatively reflected on the device, in particular reducing the service life thereof.

In this situation, the technical task placed at the base of the present invention is to provide a device for joining ducts, in particular flexible ducts, which is free from the drawbacks above mentioned.

In the ambit of said technical task, the main object of the present invention is to provide a device for joining ducts, in particular flexible ducts, which allows, at the time of the inspection or however at the first pressurization, to signal a non-clamping of one or more ducts.

A further aim of the invention is to provide a device for joining ducts, in particular flexible ducts, which shows a high service life.

The stated technical task and the specified aims are substantially attained by a device for joining ducts, in particular flexible ducts, according to the technical features expressed in one or more of the appended claims.

It is now reported, by way of not exclusive example, the description of a preferred embodiment of a device for joining ducts, in particular flexible ducts, according to the enclosed figures, in which:
- figure 1 shows a sectional view of a device for joining ducts, in particular flexible ducts, according to the present invention and according to a first embodiment;
- figure 2 shows a perspective view of the device of figure 1 in a working configuration;
- figure 3 shows a sectional view of a particular of the device of figure 1;
- figure 4 shows a sectional view of the device according to the invention, according to a second embodiment;
- figure 5 shows a sectional view of a particular of the device of figure 1 according to the first embodiment and in a working configuration;
- figure 6 shows a sectional view of a particular of the device of figure 5.

With reference to the mentioned figures, by 1 a device for the joining of ducts "T", in particular flexible ducts, has been generally shown, according to the present invention.

The device 1 is used for the mutual joining of ducts "T" used for the transport of pressurized fluids. Such ducts "T" can be both of the type carried out in a single material (for example rubber or plastic) and of the multilayer type. For example, multilayer ducts "T" are ducts containing superimposed layers of different materials and in which, specifically, one or more of such layers is made of a metal material.

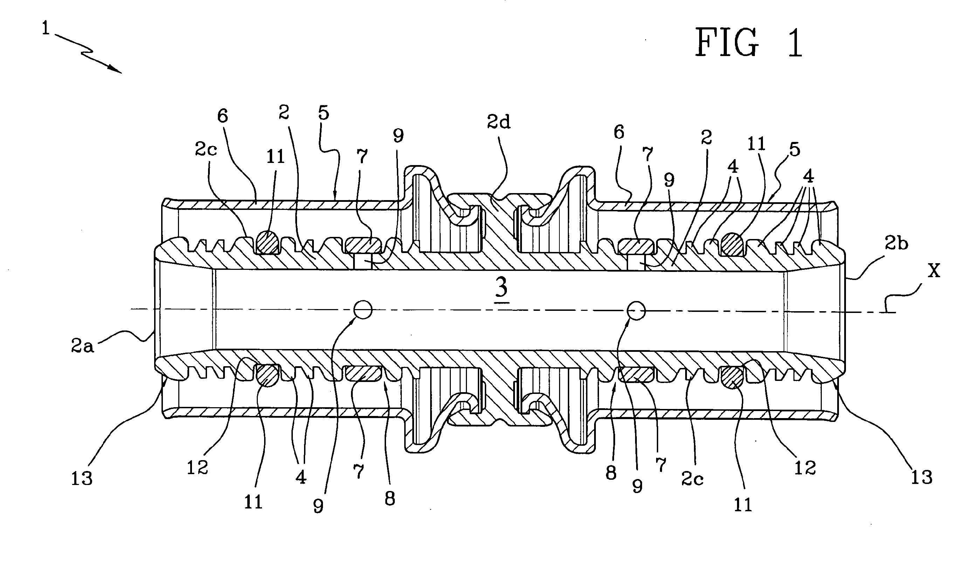

In a first embodiment shown in figure 1, the device 1 includes two tubular elements 2 called, in the technical slang, "rubber-holder", each of which defines an internal conduit 3. The conduit 3 is extending along an own longitudinal axis "X" between two openings, in particular an inlet 2a and an outlet 2b.

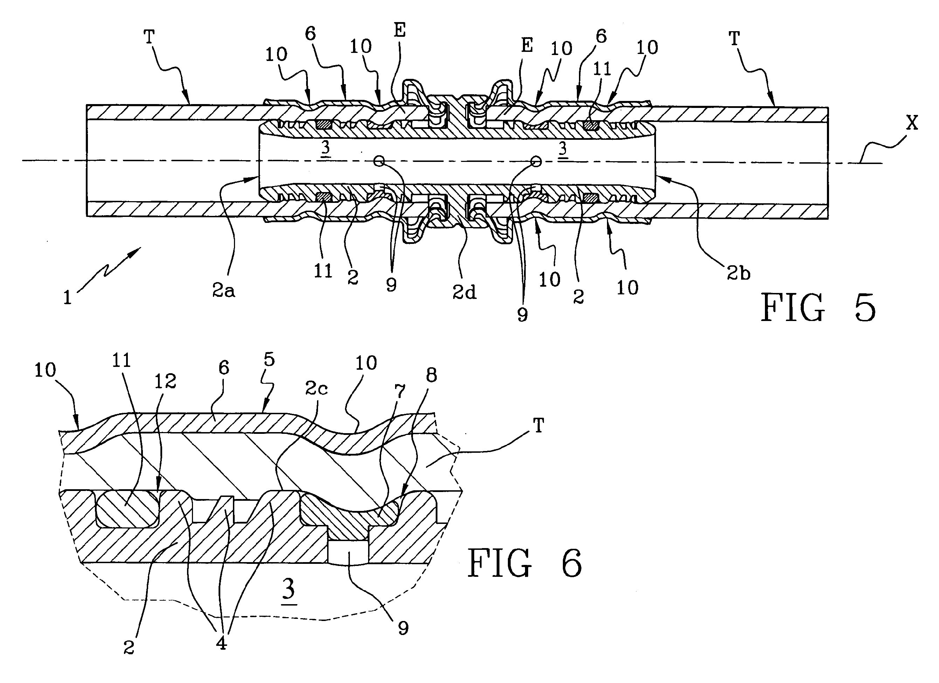

The two tubular elements 2 are connected therebetween with a fluid communication, and in particular the respective conduits 3 are consecutive therebetween and define a single communication conduit. Moreover, each tubular element 2 shows an outer surface 2c on which a duct "T" can be firmly adaptable, as it is shown in figure 5. In this way, the device 1 generates a fluid communication between the two ducts "T" by causing a continuity in the fluid circulating therein.

The tubular element 2 further shows a shoulder element 24 extending itself away from the own outer surface 2c, in order to define a shoulder surface of the duct "T" fitted on the mentioned outer surface 2c. The shoulder element 2d preferably has a radial dimension greater than the outer surface 2c of the tubular element 2, measured away from the longitudinal axis "X", for playing a handle function during a coupling step of the tubular element 2 to the duct "T".

Preferably, the tubular elements 2 have a maximum outer diameter slightly lower than an internal diameter of the ducts "T", such that the tubular elements 2 are freely introduced in the respective ducts "T".

In order to improve the embedment condition between the ducts "T" and the tubular elements 2, these latter show on the own outer surface 2c a plurality of ribs 4, which have a substantially annular profile and define a plurality of grasps for the duct "T" when coupled to the tubular element 2, as it is shown in figure 1.

The stronger is the action of such ribs 4 on the duct "T" for holding it on the tubular element 2, the higher is the pressure which acts between the duct "T" and the tubular element itself, as the ribs 4 tend to deform an inner surface of the duct "T" and to embed therewith. In order to obtain such pressure, the use of proper clamping means 5 is foreseen, which act on an outer portion of the duct "T" for generating a compression action on this latter by forcing it to adhere as much as possible to the tubular element.

Such clamping means 5 include an outer sheath 6, or a collet, which is placed astraddle of an end section "E" of the duct "T" and is deformable in a permanent way in order to maintain the duct "T" in a forced contact with the tubular element 2. The combined action of the ribs 4 and the radial compression generated by the sheath 6 effectively prevents the duct "T" from an accidental unthreading from the tubular element 2.

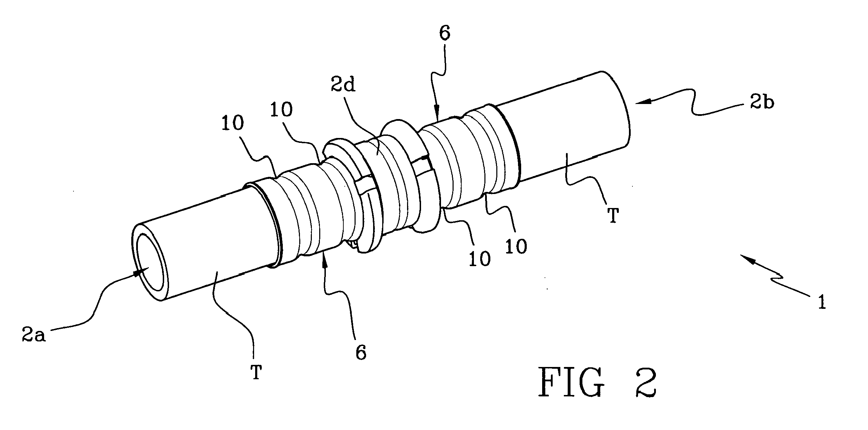

The permanent deformation of the sheath 6 is generated in a localized way in one or more predefined zones, for example by means of proper pliers or pincers. A preferred embodiment of the device 1 in a working configuration, in which the sheath 6 is actively deformed in a permanent way, is shown in the figures 2, 5 and 6. The sheath 6 is made of a permanently deformable material, preferably a metal material.

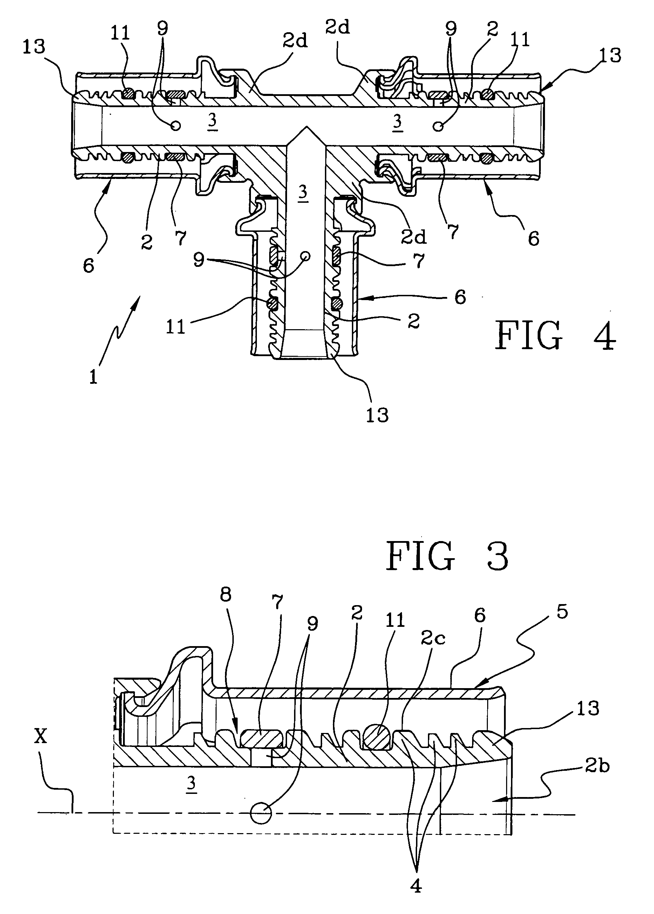

As it is shown in detail in figure 3, the device 1 further includes a preferably toroidal-shaped sealing element 7, which can be interposed between the duct "T" and the tubular element 2 for carrying out a sealing action between the conduit 3 and the external environment. In particular, the tubular element 2 shows a first seat 8 which preferably develops itself along a peripheral profile of the tubular element 2, such that the mentioned peripheral profile lies on a plane perpendicular to the mentioned longitudinal axis "X".

Advantageously, each tubular element 2 shows at least an additional opening 9, preferably two or more, in correspondence with a portion which can be coupled with the end section "E" of the duct "T". The additional opening 9, which is a through-opening, puts into fluid communication the duct 3 with the external environment. Preferably, the additional opening 9 is a hole.

Such additional opening 9 is preferably carried out in correspondence of the said first seat 8, for example a groove portion of the first seat 8, and is in a close collaboration with the sealing element 7, in particular this latter is directly operating on the additional opening 9 for allowing a flow communication between the additional opening 9 itself and the external environment.

In fact, the sealing element 7 is arranged within said first seat 8 and is operatively deformable between a non-deformed position, in which it allows a fluid communication between the conduit 3 and the external environment, and a deformed position, in which it deforms by completely obstructing the additional opening 9 and generating a fluid sealing between the conduit 3 and the external environment.

As it is generally shown in figure 5 and in detail in figure 6, the sealing element 7, under the compression action imparted by the clamping means 5, is extending at least partly within the additional opening 9 until it completely obstructs the same by avoiding further fluid leakages from the conduit 3 towards the external environment, therefore generating a complete fluid sealing through such additional opening 9.

For the purpose of also producing, at the same time of the flattening of the duct "T" on the tubular element, a correct compression action of the sealing element 7, the sheath 6 is preferably deformed in a permanent way in an own portion 10 aligned in a radial direction with respect to the sealing element 7 itself. In other words, the permanently deformed portion 10 of the sheath 6 and the sealing element 7 are preferably aligned along a plane perpendicular to the mentioned longitudinal axis "X", such that the compression force which permanently deforms the sheath 6 is directly transmitted to the underlying sealing element 7. The sealing element 7, which can be of a resilient type and being substantially formed with a gasket having a section with a proper shape, is therefore forced to extrude itself within the additional opening 9 by completely obstructing it.

In order to ensure a correct fluid sealing, the device 1 can include an auxiliary gasket 11, according to the embodiment shown in the enclosed figures. Such auxiliary gasket, preferably an 0-ring, is active between the tubular element 2 and the duct "T" in order to ensure a fluid sealing additional to the sealing action already played by the deformed sealing element 7.

The auxiliary gasket 11 is housed in a respective second seat 12 obtained on the tubular element 2, and is preferably placed in an intermediate position between the sealing element 7 and a free end 13 of the tubular element 2, which free end 13 defines a inlet or outlet section of the fluid for the tubular element 2. In such configuration, the auxiliary gasket 11 causes a fluid sealing towards the pressurized fluid which, from the inside of the duct "T", should tend to escape toward the outside between the tubular element 2 and the duct "T" which winds this latter. A possible further action of fluid escape from the conduit 3 towards the outside, through the additional opening 9, is on the contrary contrasted by the sealing element 7, as above described.

In case of the presence of two or more additional openings 9 on a same tubular element 2, such additional openings 9 are preferably aligned along a peripheral development of the tubular element 2. In particular, such additional openings 9 are arranged on a same plane perpendicular to the mentioned longitudinal axis "X", for being contemporaneously intercepted by a single sealing element 7.

Preferably, the additional openings 9 are radial, in other words develop themselves away from the mentioned longitudinal axis "X", and in particular along a direction of incidence of the mentioned axis "X" and perpendicular to this latter.

According to a further embodiment of the invention, shown in figure 4, the device 1 includes three (or, according to further embodiments not shown, a plurality of tubular elements 2, for joining together as many ducts "T".

In an embodiment not shown, the device 1 includes connecting means to a fluid source, for example a tap or a tank. In particular, such connecting means include a threaded portion, in a fluid communication with the conduit, and a handling portion which can be engaged by a screwing tool. The handling portion is generally a hexagonal projection, having a radial dimension greater than the tubular elements and suitable for being handled with a monkey wrench for carrying out a sufficiently strong screwing of the device to the fluid source. Preferably, the said handling portion is carried out on the shoulder element 2d, for defining a handle of the device 1 and at the same time being engaged by a screwing tool.

In the use, the tubular element 2 is arranged with the sealing element 7 and the auxiliary gasket 11 placed in the respective first 8 and second 12 seats. Subsequently, the tubular elements 2 are introduced within the end sections "E" of respective ducts "T", possibly already enclosed by the respective external sheaths 6, such that the ribs 4 of the tubular elements 2 can act on the ducts "T" by holding them coupled with the tubular elements 2 themselves.

Next, for example by means of pliers, compression actions are generated on the external sheath 6, in correspondence of one or more portions 10 of the sheath 6 itself, which undergo a permanent deformation which presses the duct "T" on the underlying tubular element 2 and, subsequently, causes a compression on the interposed sealing element 7, which holds it in the mentioned proper deformed position. Likewise, the same occurs for the auxiliary gasket 11.

As a result of this, it is possible to proceed to the plant inspection by circulating pressurized fluid within the ducts "T" without its escape toward the outside by virtue of the sealing action generated by the spring elements 7 and the auxiliary gaskets 11.

If, on the contrary, a sheath 6 is not clamped, when the plant is pressurized the fluid should escape at least through the additional opening 9 corresponding with the non-clamped sheath 6, and should give rise to localized leakages as well as an anomalous lowering of the working pressure of the fluid in the plant.

In order to promote the escape of the fluid from the conduit 3 towards the outside when the duct "T" is not clamped on the tubular element 2, the additional opening 9 is preferably placed on the tubular element 2 itself in a position close to the end section "E" of the duct "T". In particular, the additional opening 9 is preferably placed in proximity of the shoulder element 24 of the tubular element 2, in order to facilitate the fluid escape through the additional opening 9, as this latter in this configuration is close to the end section "E" of the duct "T" fitted on the tubular element 2.

The present invention attains the intended aims, by eliminating the pointed out drawbacks of the known art.

In fact, the structure of the device, as described and claimed, allows to find missing clamps, if any, of the ducts in plants of different complexity, in particular by causing a localized leakage of fluid in correspondence with the non-clamped gasket, which also causes a remarkable reduction of the working pressure of the plant itself, moreover easily detectable by common pressure sensors.

This is obtained by the introduction of additional openings, which allow the fluid escape during the pressurization of the plant, and only if the duct has not been clamped.

A further advantage is due to the fact that is not necessary to carry out any structural pre-weakening on the gaskets, which are dimensioned in a conventional way and therefore show optimal resistance and elasticity features, not showing, on the contrary, any compliance or pre-weakening points. It follows that, by virtue of the absence of pre-weakening of the gaskets, the device shows a service time grater than the devices for joining ducts of the known art above described, and in particular it allows to ensure a fluid sealing for a greater period of time, also under the action of stressful heat and pressure cycles to which the fluid plants are normally subjected.

## Claims

1. Device for joining ducts, in particular flexible ducts, including at least a tubular element (2) having an inlet (2a) and an outlet (2b) and a conduit (3) for setting in fluid communication the inlet (2a) with the outlet (2b), **characterized in that** said tubular element (2) shows an additional opening (9) defined between the conduit (3) and an outer surface (2c) of the tubular element (2) for allowing a fluid passage from the conduit (3) towards the external environment when a duct (T) is fitted on the tubular element (2).

2. Device according to claim 1, **characterized in that** it includes at least a sealing element (7), which can be interposed between the tubular element (2) and a duct (T) fitted on the same; said sealing element (7) being deformable in order to inhibit a fluid communication between the conduit (3) and the outer surface (2c) of the tubular element (2).

3. Device according to claim 2, **characterized in that** said sealing element (7) directly acts on said additional opening (9) in order to obstruct the same following to a compression action exerted on the duct (T).

4. Device according to any one of the preceding claims, **characterized in that** said additional opening (9) is placed on the outer surface (2c) of the tubular element (2) in correspondence with a portion thereof which can be fitted by a duct (T).

5. Device according to any one of the preceding claims, **characterized in that** said additional opening (9) is radially developed with respect to said conduit (3).

6. Device according to any one of the preceding claims, **characterized in that** the tubular element (2) shows a plurality of additional openings (9), arranged along a peripheral development of said tubular element (2).

7. Device according to claim 6 when depending from claim 3, **characterized in that** the sealing element (7) is toroidal-shaped, in order to simultaneously intercept said additional openings (9).

8. Device according to any one of the preceding claims, **characterized in that** said tubular element (2) shows a shoulder element (2d) extending away from the outer surface (2c) of the tubular element (2) for defining a shoulder surface of a duct (T) fitted on said outer surface (2c).

9. Device according to claim 8, **characterized in that** said additional opening (9) is placed in proximity of said shoulder element (2d).

10. Device according to any one of the preceding claims, **characterized in that** it includes an auxiliary gasket (11), operating between the outer surface (2c) of the tubular element (2) and a duct (T) fitted on the same, said auxiliary gasket (11) being placed between the additional opening (9) and a free end (13) of the tubular element (2) for preventing a fluid communication between the conduit (3) and the external environment.

11. Device according to claim 10, **characterized in that** said auxiliary gasket (11) is an 0-ring.

12. Device according to any one of the preceding claims, **characterized in that** it includes a plurality of tubular element (2) in fluid communication therebetween, on each of said tubular elements (2) being adaptable a respective duct (T).

13. Device according to claim 12, **characterized in that** said tubular elements (2) are identical therebetween.

14. Device according to any one of the preceding claims, **characterized in that** it includes connecting means to a fluid source.

15. Device according to claim 14, **characterized in that** said connecting means include a threaded portion, in fluid communication with the conduit (3), and a handling portion which can be engaged by a screwing tool.

16. Device according to any one of the preceding claims, **characterized in that** said sealing element (7) is of a resilient type.

17. Device according to any one of the preceding claims, **characterized in that** said sealing element (7) is a gasket having a section of a proper shape.
